Europäisches Patentamt

European Patent Office

Office européen des brevets

(19)

(11) Publication number : **0 488 483 A1**

# (12) EUROPEAN PATENT APPLICATION

(21) Application number : **91203163.0**

(22) Date of filing : **02.12.91**

(51) Int. Cl.[5] : **A47G 23/02**, A47J 36/24, A47J 39/02

(30) Priority : **30.11.90 NL 9002627**

(43) Date of publication of application :
**03.06.92 Bulletin 92/23**

(84) Designated Contracting States :
**AT BE CH DE DK ES FR GB GR IT LI LU MC NL SE**

(71) Applicant : **Bril, Bejamin Gerald**
**Oude Groenmarkt 6**
**NL-2011 HL Haarlem (NL)**
(71) Applicant : **Bril, Abraham Bejamin**
**Frans Zwaanstraat 74**
**NL-2032 CE Zandvoort (NL)**

(72) Inventor : **Bril, Bejamin Gerald**
**Oude Groenmarkt 6**
**NL-2011 HL Haarlem (NL)**
Inventor : **Bril, Abraham Bejamin**
**Frans Zwaanstraat 74**
**NL-2032 CE Zandvoort (NL)**

(74) Representative : **Smulders, Theodorus A.H.J.,**
**Ir. et al**
**Vereenigde Octrooibureaux, Nieuwe Parklaan 97**
**NL-2587 BN Den Haag (NL)**

(54) **Apparatus for heating beverage containers.**

(57) An apparatus for heating beverage containers (3), suitable in particular for beverage glasses (13), comprising a nozzle (6) which can cooperate with the beverage container (13) to be heated ; a fan (5) adapted to draw in air and impel it through the nozzle (6) ; an electric heating element (9) which in operation heats the air impelled or drawn in by the fan (5) ; and at least one switch (11) for switching the fan (5) and the heating element (9) on and off.

FIG. 1

EP 0 488 483 A1

Jouve, 18, rue Saint-Denis, 75001 PARIS

This invention relates to an apparatus for heating beverage containers, suitable in particular for beverage glasses.

Some drinks must preferably be served in a preheated container. A well-known example is brandy. This drink is best savoured in a preheated brandy glass. Conventional techniques for heating a glass or other beverage container comprise, for instance, filling the glass with a small quantity of hot water, which is passed through the glass by moving the glass with the hand and subsequently poured from the glass. It is true that the water heats the glass to some degree, but the glass must subsequently be dried. As a consequence, the glass will already have cooled off appreciably by the time it is served.

According to another known technique, the glass, which may or may not have been placed in a bracket, is heated by means of the flame of a candle. A drawback of this procedure is that the glass is heated only very locally and therefore must be turned continuously. Another drawback is that the glass may get sooted.

In yet another method, the steam pipelet of an espresso machine is used for heating a glass with steam. Not only is this method noisy, it also yields a moist glass and may involve residual milk being blown into the glass, which is undesirable.

Accordingly, there is a need for an apparatus for heating beverage containers, particularly beverage glasses, in a simple, yet quick and efficient manner. The object of the present invention is to provide for the need outlined. To that end, according to the invention, an apparatus of the type described hereinabove is characterized by a nozzle which can cooperate with the beverage container to be heated; a fan which can draw in air and impel it through the nozzle; an electric heating element which in operation heats the air impelled or drawn in by the fan; and at least one switch for switching the fan and the heating element on and off.

Hereinafter, the invention will be further described, by way of example, with reference to the accompanying drawings of some embodiments.

Fig. 1 is a schematic view of a first embodiment of an apparatus according to the invention; and

Fig. 2 is a schematic view of a second embodiment of an apparatus according to the invention.

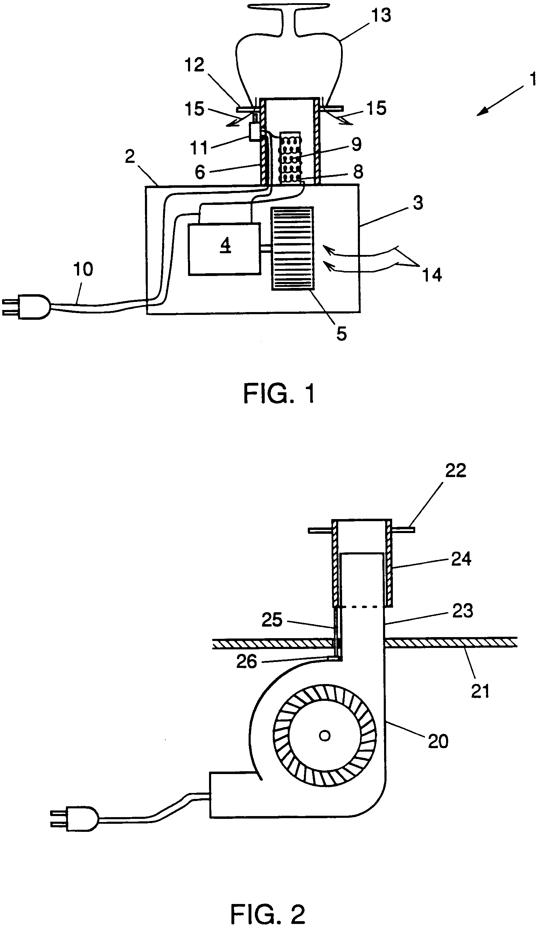

Fig. 1 is a schematic view of a first embodiment of a heating apparatus 1 according to the invention. The apparatus 1 comprises a housing 2, which is box-shaped in this example and comprises an air supply grate in at least one of its sidewalls 3. Arranged in this housing is an electric motor 4 comprising an output shaft with a blade wheel, for instance a ventilating mill 5, which can be of a construction similar to that of a blower for a heating device as typically used in automobiles.

Arranged on the housing is an outlet nozzle 6, which, in the example shown, is formed by a tube of circular cross-section. Mounted in the tube is a heating element 7 comprising in a conventional manner at least one heating coil 9 mounted on a support 8.

The electric motor 4 and the heating coil 9 are provided with electric energy via a connecting cord 10 and a switch 11. The switch 11 may be arranged at any desired location on the apparatus and be operable by hand. In the embodiment shown, the switch 11 is a push-button switch mounted on the outlet nozzle. The switch shown may further be operated by a supporting ring 12 mounted on the nozzle, above the switch. This supporting ring 12 can be moved up and down the nozzle to some extent. By pressing this ring down by means of the rim of a glass 13 placed on the ring in inverted position, the switch 11 is operated and the fan motor and the heating coil are energized. The fan draws in air via the wall(s) 3 of the housing that are provided with a grate, as indicated by arrows 14, and blows the air through the nozzle 6 into the glass 13, the air being heated by the heating coil 9. The warm air then flows into the glass, heats it and eventually leaves it along and/or through the ring 12, as indicated by arrows 15. For that purpose, the ring 12 may be provided with radial ribs and grooves, so that the air can escape via the grooves along the rim of the glass. The ring may also be provided with perforations or, for instance, be constructed as a spoke wheel having spokes extending between an inner ring and an outer ring.

Fig. 2 is a schematic view of another embodiment of an apparatus according to the invention, where use has been made of a commercially available hot-air apparatus 20, which may or may not have been modified, such as a hair drier or a hot-air gun.

The apparatus 20 is mounted in a holder 21, shown only in part, and likewise comprises a supporting ring 22 for receiving a glass in the manner shown in Fig. 1. In this embodiment, the ring 12 is mounted on a sleeve 24 which can be shifted up and down telescopically along the nozzle 23 of the apparatus 20. In the embodiment shown, the sleeve 24 has the same diameter throughout its length, but it may also be of narrowing or widening configuration beyond the end of the nozzle 23. Adjustment to the type of beverage container to be heated can be effected by fitting the apparatus 20 with different sleeves.

Preferably, the sleeve 24 is mounted slightly resiliently and adapted to operate a switch 26 of the apparatus via a schematically shown operating member 25.

It is observed that after the foregoing, various modifications will readily occur to those skilled in the art. Thus, the sleeve 24 may at least partly be perforated or even be constructed with bars like a cage. In that case, the ring 22 is not required to permit the passage of air. The same applies to the end of the nozzle 6 of the apparatus shown in Fig. 1.

Further, it is possible to provide an apparatus according to the invention with more than one nozzle, which may or may not be combined with a separate associated heating element and, optionally, an associated fan.

The switch may be arranged at different locations. It is for instance possible to build the switch into the wall of the nozzle and to provide it with a slightly protruding, rounded or bevelled operating member which upon downward movement of the ring 12 or the sleeve 24 is pushed inwards and thereby switches on the fan and the heating coil.

Also, the air can be drawn in through a heating element and subsequently be blown off.

These and similar modifications are understood to fall within the scope of the invention.

**Claims**

1. An apparatus for heating beverage containers, suitable in particular for beverage glasses, characterized by a nozzle which can cooperate with the beverage container to be heated; a fan which can draw in air and impel it through the nozzle; an electric heating element which in operation heats the air impelled or drawn in by the fan; and at least one switch for switching the fan and the heating element on and off.

2. An apparatus according to claim 1, characterized in that the nozzle comprises a supporting member for supporting the rim of the beverage container to be heated.

3. An apparatus according to claim 2, characterized in that the supporting member is movably mounted so that upon arrangement of a beverage container to be heated onto said supporting member, said supporting member can operate said at least one switch for switching the fan and the heating element on and off.

4. An apparatus according to claim 2 or 3, characterized in that the supporting member comprises a ring mounted concentrically with the nozzle, said ring being adapted to move up and down in the longitudinal direction of the nozzle.

5. An apparatus according to claim 4, characterized in that the ring comprises a supporting face for the beverage container to be heated, said supporting face comprising radial grooves.

6. An apparatus according to claim 4 or 5, characterized in that the ring is provided with perforations.

7. An apparatus according to claim 4, characterized in that the ring is made up of an inner ring and an outer ring with spokes extending from the inner ring to the outer ring.

8. An apparatus according to any one of claims 4-7, characterized in that the ring is carried by a sleeve that can be moved telescopically relative to the nozzle.

9. An apparatus according to claim 8, characterized in that the wall of the sleeve is provided with apertures.

10. An apparatus according to claim 8, characterized in that the wall of the sleeve is made up of spaced apart bars.

11. An apparatus according to any one of claims 8-10, characterized in that the sleeve comprises a first portion that fits precisely on or in the nozzle and a portion that extends beyond the nozzle and has a diameter adjusted to the beverage container to be heated.

12. An apparatus according to any one of claims 3-11, characterized in that said at least one switch is mounted in the wall of the nozzle and comprises an outwardly extending operating member which can be depressed by the supporting member.

13. An apparatus according to any one of the preceding claims, characterized in that the heating element is arranged in the nozzle.

14. An apparatus according to any one of the preceding claims, characterized by a housing comprising at least one wall having a grate; a fan arranged in the housing; at least one heating element; and at least one nozzle mounted on the housing, said nozzle comprising a supporting member for supporting the rim of a beverage container to be heated.

FIG. 1

FIG. 2

European Patent
Office

**EUROPEAN SEARCH REPORT**

Application Number

EP    91 20 3163

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 827 477 (WEINER ET AL)<br><br>* column 4, line 30 - column 5, line 15; figures * | 1-4,13,14 | A47G23/02<br>A47J36/24<br>A47J39/02 |
| A | | 12 | |
| Y | DE-U-1 898 074 (SCHAAL)<br><br>* claim 1; figure * | 1-4,13,14 | |
| A | US-A-3 373 580 (FEDERIGHI)<br><br>* column 4, line 26 - column 5, line 25; figures * | 2,4-6,8,11 | |
| A | EP-A-0 013 010 (HANS KARL KLEINDIENST METALLWARENFABRIK) | | |
| | | | TECHNICAL FIELDS SEARCHED (Int. Cl.5)<br><br>A47G<br>A47J |

The present search report has been drawn up for all claims

| Place of search | Date of completion of the search | Examiner |
|---|---|---|
| THE HAGUE | 24 FEBRUARY 1992 | BODART P. |